# EUROPEAN PATENT APPLICATION

(11) **EP 0 790 164 A1**
(43) Date of publication of application: **20.08.1997**
(21) Application number: 97300970.7
(22) Date of filing: 14.02.1997
(51) Int. Cl.: B60S 9/16, B66F 7/24

(54) **Support apparatus**

(30) Priority: 15.02.1996 GB 9603144
(71) Applicant: Drummond Power Limited, Inverurie, Aberdeenshire AB51 0DA (GB)
(72) Inventor: Gordon, James Drummond, East Preston, West Sussex BN16 1LU (GB)
(74) Representative: McCallum, Graeme David

(57) **Abstract**

There is provided a support apparatus (28; 70) for a vehicle (10; 71) such as an agricultural tractor (10) or a truck (71). The support apparatus (28; 70) comprises a support frame (30; 77) which is detachably mountable to the vehicle (10; 71). There are ground-engageable support means (32; 78, 79) connected to the support frame (30; 77) which are height adjustable with respect thereto. There are lock means (34) for locking the ground-engageable support means (32; 78, 79) at a selected height with respect to the support frame (30; 77) so that at least part of the weight of the vehicle (10; 71) can be supported on the ground through the support frame (30; 77) and the ground-engageable support means (32; 78, 79).

## Description

This invention relates to support apparatus, particularly, but not exclusively, for use in relation to trucks, agricultural tractors and like vehicles for supporting such vehicles in a raised condition during such operations as wheel changing, servicing, maintenance and the like.

Conventionally, portable jacks are employed for raising vehicles from the ground for wheel changing and other such operations. However, while the use of a jack is perfectly satisfactory in many ways, there is the added complication that for safety reasons the vehicle should be subsequently lowered onto a support such as a series of axle stands or the like before any work can be done on the underside of the vehicle. Moreover, these complications are exacerbated where the vehicle in question is an agricultural tractor, truck or the like and it is necessary to carry out the work in field conditions.

Proposals have been made for lifting and support apparatus for road and other vehicles for such situations, the apparatus involving equipment permanently mounted on the vehicle for use in such emergency situations. However, this is a relatively expensive solution to the problem and some simper and less costly solution is needed for such a system to have a wider appeal.

An aim of the present invention is to provide support apparatus offering improvements in relation to one or more of the problems identified above.

According to the invention there is provided support apparatus for a vehicle, the apparatus comprising a support frame which is detachably mountable on a vehicle, and ground-engageable support means connected to the frame so as to be height-adjustable with respect thereto, and lock means for the ground-engageable support means whereby the ground-engageable support means can be locked at a selected height with respect to the support frame so that at least part of the weight of a vehicle can be supported on the ground through the support frame and the ground-engageable support means.

Preferably, the support frame is adapted to be mounted on the hitch links or mounting points of a truck, agricultural tractor or the like. The support frame may be adapted to be mounted on all three hitch links of such a tractor. Alternatively, the support frame may be adapted to be mounted on at least one mounting point of a truck.

Said ground engageable support means may comprise at least a pair of telescopic legs. At least one of the legs may comprise a hydraulic ram. The lock means may comprise a pin and aperture arrangement for the telescopic legs. Alternatively, the lock means may comprise operation of the ram in an extended and static position. The ram may be arranged to be extended under power to engage the ground and apply an upthrust to the support frame. The ram may be arranged centrally with respect to the support frame and provided with two telescopic legs one on each side of the ram. Alternatively, there are a pair of telescopic legs, and each leg comprises a ram.

Preferably, the support frame is moveable from an in use position mounted on the vehicle to a storage position mounted on the vehicle.

The invention also provides a vehicle in combination with support apparatus as defined above.

According to a further aspect of the invention there is provided any concept or feature or combination of features defined and/or described and/or illustrated in this specification and drawings.

Examples of support apparatus in accordance with the invention will now be described with reference to the accompanying drawings in which:-
Fig. 1 shows, diagrammatically, a side elevation view of an agricultural tractor having mounted on the hitch links thereof a first example of support apparatus according to the invention;
Fig. 2 shows, diagrammatically, a rear elevation view in the direction of arrow II in Fig. 1, of the support apparatus mounted on the hitch links of the tractor between the rear drive wheels thereof;
Fig. 3 is a schematic diagram showing a second example of support apparatus mounted on a truck;
Fig. 4 is a schematic diagram of a portion of the support apparatus of Fig.3 showing an upper mounting point; and
Fig. 5 is a schematic diagram of a portion of the support apparatus of Fig. 3 showing a lower mounting point.

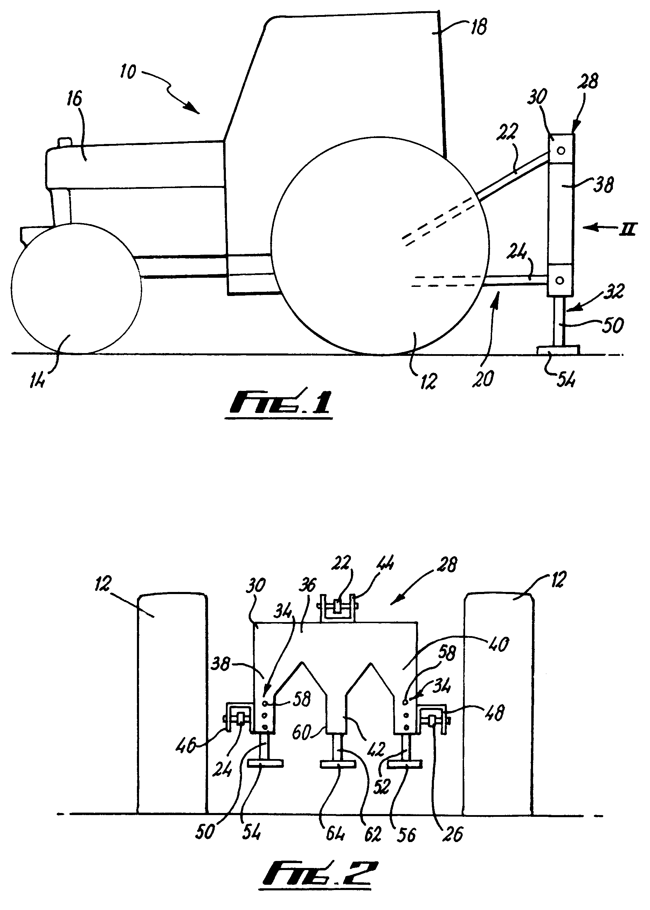

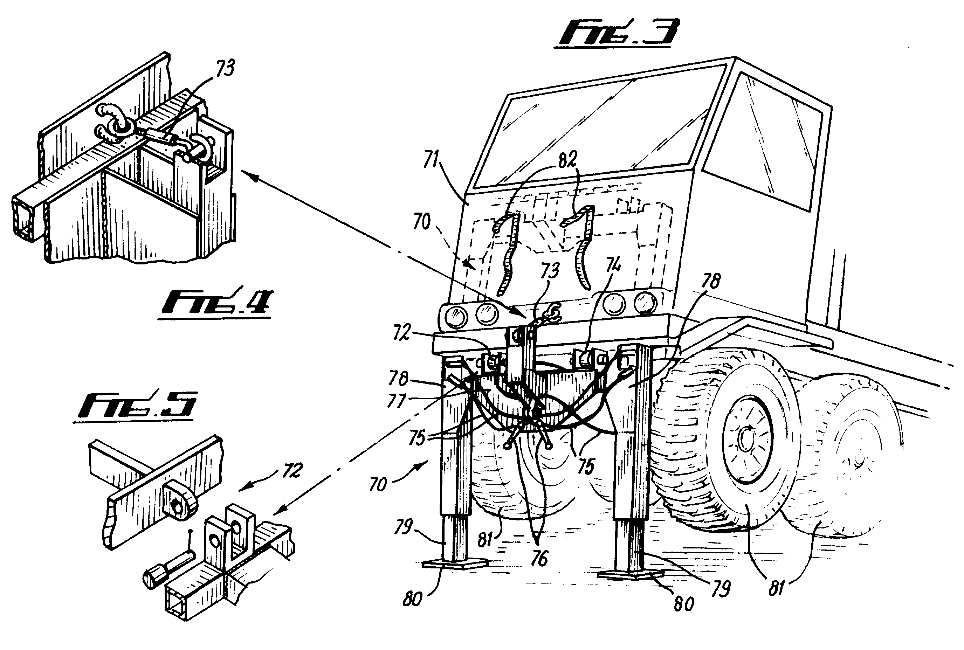

As shown in the Figs. 1 and 2, an agricultural tractor 10 comprises ground engageable rear drive wheels 12 and front steerable wheels 14, an engine 16, a cab 18 and a three point hitch 20 comprising a top link 22 and draft or lower links 24, 26. Draft links 24, 26 are connected to a hydraulically-operated power lift system (not shown) mounted within the body of the tractor. Hitch 20 operates in the conventional manner of such a hitch for an agricultural tractor.

Mounted on hitch 20 is support apparatus 28 comprising a support frame 30, ground engageable support means 32 and lock means 34.

Support apparatus 28 is adapted to carry the weight of the rear end of tractor 10 so as to support the latter with rear wheels 12 raised from the ground during wheel changing and other servicing operations.

Frame 30 comprises a main frame member 36 extending laterally at the top of the frame, two side frame members 38 and 40 extending downwardly from the main frame member and a central frame member extending downwardly between the side frame members and the whole structure thus being generally E-shaped in form.

Frame 30 is provided with three hitch connectors 44, 46 and 48 to receive the hitch links 22, 24 and 26 respectively, whereby the frame and apparatus 28 are detachably mountable on the hitch 20 in a fixed attitude relative thereto. The hitch connectors are connected to the draft and top links in the conventional manner by hitch pins and associated lynch pins to prevent detachment during use.

Ground engageable support means 32 comprises the side and central frame members 38, 40 and 42. The side frame member 38 and 40 have slidably received therein respective telescopic legs 50 and 52 each having its own ground engageable foot 54, 56 respectively. The side frame members 38, 40 and their associated legs 50, 52 have a series of alignable apertures 58 to receive corresponding pins whereby the legs can be locked in a variety of extended positions for the purposes set forth below.

Central frame member 42 comprises a hydraulic ram 60 arranged with its piston 62 extending downwardly parallel to telescopic legs 50, 52 and having its own ground engageable foot 64. Ram 60 is a comparatively large diameter double-acting hydraulic ram and connectible to the hydraulic system of tractor 10 by means of quick-attach conventional hydraulic connectors at the ends of hydraulic hoses (not shown). In this manner, the tractor driver can, by operation of a spool valve (not shown) extend and retract piston 62 from his driving position in cab 18.

Operation of the apparatus is as follows.

Frame 30 is normally not mounted on tractor 10 during the major part of tractor usage. When required, such as for wheel changing operations, frame 30 is mounted on hitch 20 by means of hitch pins in the manner already described and thereby is held in the attitude shown in the drawings. Ram 60 is connected to the hydraulic systems of the tractor by its associated hoses and quick-attach connectors.

Hitch 20 is raised to its fully-lifted position and ram 60 is then extended so as to bring ground engageable foot 64 into engagement with the ground and then to lift the rear end of the tractor including drive wheels 12 from the ground.

Telescopic legs 50, 52 are then lowered and pinned by means of apertures 58 in their extended positions in engagement with the ground, whereupon ram 60 is retracted and the weight of the rear end of the tractor then rests and is carried by telescopic legs 50, 52 so that rear wheels 12 of the tractor are held clear of the ground and frame 30 supports the weight of the rear portion of the tractor through the hitch 20.

It will be appreciated that the above-described embodiment of the invention provides simple means for quickly and easily raising the rear end of the tractor from the ground using the tractor's own power and without the use of a separate jack. Moreover, the tractor is mechanically supported when the raising operation is complete and no reliance is then placed on the hydraulic system for support. Additionally, the support apparatus 28 is relatively compact and easily stored for access.

Among modifications which could be made in the above-described embodiment without departing from the scope of the invention are the following.

Considerable variation in the form of frame 30 is of course possible according to requirements. All that is required is a rigid structure mountable at least on the draft links and preferably on all three links. Side frame members 36, 38 could themselves be provided in the form of hydraulic rams with locking means such as apertures in the ram pistons for insertion of locking pins. In this case, there would be no particular need for the central frame member and its ram, the side frame members would both be extended for tractor lifting purposes and would then be mechanically pinned in their extended positions.

Furthermore, the provision of a ram on frame 30 is by no means essential and the support apparatus 28 may be offered simply to complement separate jacking means for the tractor whereby after raising the tractor by such separate jacking means the telescopic legs 50, 52 of the frame can be extended and pinned in their extended positions and the tractor then lowered onto the legs so that the weight is carried thereon during wheel changing and like operations.

In this latter connection, it will be appreciated that some modern tractors are provided with hitches which can not only be caused by tractor power to move upwards, but also in the downwards direction ie. the draft links can be thrust downwards. On the case of use of the apparatus 28 on such a tractor it would be possible to use the tractor hitch in conjunction with apparatus 28 to apply thrust from the hitch through the apparatus to the ground and thereby raise the tractor even without the use of the rams (if any) provided on the support apparatus. It would then be possible to prop or support the rear end of the tractor on some additional support means such as axle stands for wheel changing and other operations.

Fig. 3 shows a second example of support apparatus 70 mounted on the front of a truck 71, by three mountings points 72, 73, 74. The upper mounting point 73 is shown in Fig. 4 and the lower mounting point 72 is shown in Fig. 5. Hydraulic pipes 75 connect the apparatus 70 to the truck's hydraulic system and spool levers 76 can be used to operate the apparatus 70. The apparatus 70 comprises a central frame 77 which is coupled by the attachment points 72, 73, 74 to the truck 71. Attached to each side of the central frame 77 is a vertically depending leg 78. The two legs 78 each include a hydraulic ram 79 having a ground engaging foot 80.

Operation of the levers 76 operates the rams 79 causing the rams to extend and the feet 80 to engage with the ground. Further extension of the rams 79 causes wheels 81 of the truck 71 to be lifted off the ground.

The rams 79 are then maintained in a locked and static state whilst wheel 81 changing and like operations are conducted.

In addition, the truck 71 has straps 82 which permit the apparatus 70 to be stored on the front of the truck 71, when not is use, as indicated in phantom, such that the ground engaging feet 80 rest on the step of the truck.

For larger trucks 71, a suitably sized central frame should be used to carry the extra weight of the larger truck 71.

The upper most mounting point 73 comprises an adjustable buckle link fitting 73 which connects the support apparatus 70 to the tow hook mounted on the front of the truck 71. The lower two mounting points 72, 74 comprise a male and a female connecting pieces which are locked together by a key and locking pin arrangement. The male connecting piece is mounted on the chassis end plate of the truck 71.

Modifications and improvements may be made to the embodiments without departing from the scope of the invention.

## Claims

1. A support apparatus (28; 70) for a vehicle (10; 71), the apparatus (28; 70) comprising a support frame (30; 77) which is detachably mountable on a vehicle (10; 71), and ground-engageable support means (32; 78,79) connected to the frame (30; 77) so as to be height-adjustable with respect thereto, and lock means (34) for the ground-engageable support means (32; 78, 79) whereby the ground-engageable support means (32; 78, 79) can be locked at a selected height with respect to the support frame (30; 77) so that at least part of the weight of a vehicle (10; 71) can be supported on the ground through the support frame (30; 77) and the ground engageable support means (32; 78, 79).

2. A support apparatus (28; 70) for a vehicle (10; 71) according to claim 1, wherein the support frame (30; 77) is adapted to be mounted on at least one hitch link of the vehicle (10; 71).

3. A support apparatus (28; 70) for a vehicle (10; 71) according to either claim 1 or claim 2, wherein the vehicle (10; 71) is a tractor (10) and the support frame (30) is adapted to be mounted on three hitch links (20) of such a tractor (10).

4. A support apparatus (28; 70) for a vehicle (10; 71) according to any of the preceding claims, wherein the ground-engageable support means (32; 78, 79) comprise at least a pair of telescopic legs (50, 52; 78).

5. A support apparatus (28; 70) for a vehicle (10; 71) according to claim 4, wherein at least one of the legs (50, 52; 78) comprise a ram (60; 79).

6. A support apparatus (28; 70) for a vehicle (10; 71) according to claim 5, wherein the ram is arranged to be extended under power to engage the ground and apply an upthrust to the support frame (30; 77).

7. A support apparatus (28; 70) for a vehicle (10; 71) according to claim 6, wherein there is a pair of telescopic legs (50, 52; 78), and each leg (50, 52; 78) comprises a ram (60; 79).

8. A support apparatus (28; 70) for a vehicle (10; 71) according to any of the preceding claims, wherein the lock means (34; 79) is the ram (60; 79) in an extended and static position.

9. A support apparatus (28; 70) according to any of claim 1 and claims 4 to 8, wherein the vehicle is a truck (71), and the support frame (30) is adapted to be mounted on at least one mounting point (72, 73, 74).

10. A support apparatus (28; 70) according to claim 9, wherein the support frame (77) is moveable from an in use position mounted on the vehicle (10; 71) to a storage position mounted on the vehicle (10; 71).
